# FASCICULE DE BREVET EUROPEEN

(11) **EP 2 178 892 B1**
(45) Date de publication et mention de la délivrance du brevet: **05.09.2012**
(21) Numéro de dépôt: 08829134.9
(22) Date de dépôt: 16.07.2008
(51) Int. Cl.: C07F 11/00, G01N 21/29, C03C 4/06, A61K 8/49, A61Q 5/10, A61Q 1/00

(54) **NOUVEAUX MATERIAUX PHOTOCHROMES**
NEUE PHOTOCHROME MATERIALIEN
NOVEL PHOTOCHROMIC MATERIALS

(30) Priorité: 17.07.2007 FR 0705149
(43) Date de publication de la demande: 28.04.2010
(73) Titulaire: Centre National de la Recherche Scientifique, 75016 Paris (FR)
(72) Inventeur: JOBIC, Stéphane, F-44340 Bouguenais (FR); BUJOLI-DOEUFF, Martine, F-44240 Sucé Sur Erdre (FR); COUÉ, Violaine, D- 60489 Frankfurt (DE); DESSAPT, Rémi, F-44000 Nantes (FR)
(74) Mandataire: Corizzi, Valérie
(86) Numéro de dépôt international: PCT/FR2008/001041
(87) Numéro de publication internationale: WO 2009/030831

(56) Documents cités:
- COUE, VIOLAINE ET AL: "Synthesis, Characterization, and Photochromic Properties of Hybrid Organic-Inorganic Materials Based on Molybdate, DABCO, and Piperazine" INORGANIC CHEMISTRY (WASHINGTON, DC, UNITED STATES) , 46(7), 2824-2835 CODEN: INOCAJ; ISSN: 0020-1669, 2007, XP002469294

## Description

L'invention a pour objet de nouveaux matériaux hybrides organique-inorganique à base de Molybdène dotés de propriétés photochromes. Elle a également pour objet leur utilisation, notamment en cosmétique et dans le domaine des verres, comme par exemple dans les vitrages ou la fabrication de verres de lunettes.

Les matériaux photochromes de nature purement organique ou purement inorganique sont connus de longue date. Depuis plusieurs années, une nouvelle famille de matériaux photochromes a fait l'objet de nombreuses études : les matériaux hybrides organique-inorganique. On peut par exemple se reporter à T. Yamase, Chem. Rev. 98 (1998) 307-325 ; V. Coué et al., J. Solid State Chemistry, 179 (2006) 3615-3627 ; V. Coué et al., Inorganic Chemistry, 46 (2007) 2824-2835.

Parmi les matériaux hybrides organique-inorganique connus, plusieurs étaient à base de Molybdène. Toutefois, il a été constaté que la présence de chaînes polyoxyde de Molybdène associées à des ligands organiques tels que H₂DABCO²⁺ n'était nullement suffisante pour obtenir des composés photochromes (M. Evain et al., Acta Cryst. (2006), B62, 790-797). En réalité, il a été constaté que le photochromisme et la réversibilité de ce phénomène dépendait de l'interaction entre la partie organique et la partie inorganique du matériau, sans que des règles permettant de prévoir ces propriétés aient pu être mises en évidence (T. Yamase, Chem. Rev. 98 (1998) 307-325)

En outre, il a été constaté que les caractéristiques du phénomène de photochromisme (cinétique de changement de couleur, énergie d'excitation, stabilité de l'état photo-induit, vitesse de blanchiment) étaient extrêmement variables d'un matériau à un autre.

La Demanderesse a maintenant découvert un nouveau matériau dérivé du Molybdène qui est doté de propriétés photochromiques supérieures à celles décrites pour les matériaux de l'art antérieur.

Ce nouveau matériau répond à la formule (I) ci-dessous :

(H₂DABCO²⁺)₂(R₁R₂NH₂⁺)_{(2-x-y)}(X)ₓ(H₃O⁺)_{y} (Mo₈O₂₇).z(H₂O) (I)

dans laquelle :
R₁, R₂ identiques ou différents représentent chacun un groupement alkyle en C₁-C₁₂, alcényle en C₁-C₁₂, ou alcynyle en C₁-C₁₂, qui peut être linéaire, ramifié ou cyclique ;
X représente un atome alcalin, choisi notamment parmi : Li, Na, K, Rb, Cs;
x est un nombre réel 0 ≤ x ≤ 2 ;
y est un nombre réel 0 ≤ y < 2 ;
z est un nombre réel 0 ≤ z ≤ 10 ;
DABCO désigne, comme cela est connu, la molécule 1,4-diazabicyclo[2.2.2] octane.

De façon avantageuse, dans la formule (I) R₁ = R₂.

De façon avantageuse, dans la formule (I), R₁ et R₂ sont choisis parmi les alkyles en C₁-C₁₀, encore mieux en C₁-C₆.

De façon encore plus préférentielle dans la formule (I), R₁ et R₂ sont choisis parmi les alkyles en C₁-C₃ comme le méthyle, l'éthyle, le n-propyle, l'isopropyle, et encore plus préférentiellement R₁ = R₂ = CH₃.

De préférence 0,5 ≤ x ≤ 1, encore plus préférentiellement x = 0,8.

De préférence 0,5 ≤ y ≤ 1, encore plus préférentiellement y= 0,7.

Z représente le taux d'hydratation de la molécule, et de façon avantageuse 0 ≤ z ≤ 6.

De préférence X représente un atome choisi parmi Na et K, avantageusement, X = Na.

De préférence, le matériau de l'invention répond à la formule (Ia) ci-dessous :

(H₂DABCO²⁺)₂((CH₃)₂NH₂⁺)_{0.5}(Na)_{0.8}(H₃O⁺)_{0.7}(Mo₈O₂₇). 3(H₂O) (Ia)

Par rapport aux matériaux photochromes de l'art antérieur, et en particulier par rapport aux autres matériaux dérivés de Mo₈O₂₇, les matériaux de l'invention sont dotés de nombreux avantages : plus grande rapidité de coloration, réversibilité de la coloration lorsque le matériau n'est plus soumis à un stimulus externe, stabilité du matériau, intensité de la coloration. En outre, les matériaux de l'invention ont la propriété d'être insolubles dans l'eau, ce qui a pour conséquence le fait que, lorsqu'ils sont mis en présence d'un milieu contenant de l'eau, leurs propriétés photochromes ne sont pas affectées par l'eau.

Le matériau de l'invention peut être préparé suivant le procédé décrit ci-dessous :
Le composé précurseur X₂MoO₄.nH₂O est dissous dans de l'eau, avec 0,2 à 0,3 équivalents, de préférence environ 0,25 équivalents, de DABCO et 0,8 à 1,2 équivalents, de préférence environ 1 équivalent, de R₁R₂N⁺H₂, Cl⁻. La variable n représente le taux d'hydratation du composé X₂MoO₄. Elle varie en fonction de X, par exemple lorsque X représente Na, on peut choisir n=2, lorsque X représente K, on peut choisir n=0. Ces précurseurs sont disponibles commercialement. Le pH de la solution est ajusté à une valeur inférieure à 5, de préférence 4, à l'aide d'une solution aqueuse d'un acide tel que HCl. Le matériau attendu précipite. Il est alors filtré et lavé à l'eau et éventuellement avec de l'éthanol et/ou de l'éther éthylique.

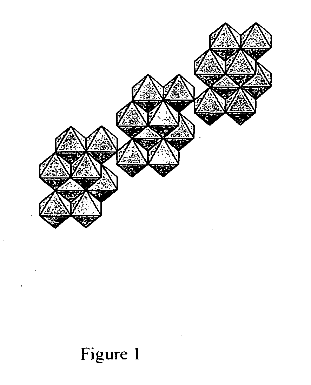

Le matériau de formule (I) consiste en des chaînes infinies ¹/_{∞}[Mo₈O₂₇]⁶⁻ comme illustré sur la figure 1. Ces chaînes sont entourées des cations organiques, de X⁺, de H₃O⁺ et éventuellement de molécules H₂O.

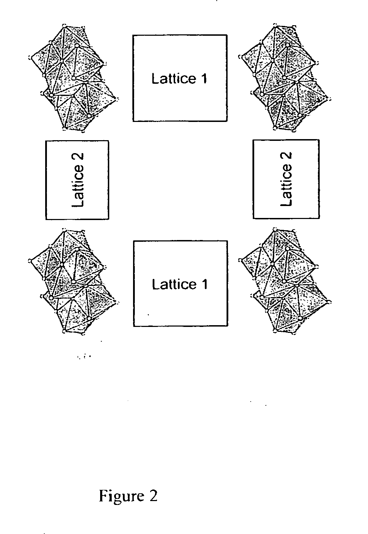

Sur la figure 1 est représentée de façon schématique la chaîne ¹/_{∞}[Mo₈O₂₇]⁶⁻. Un octaèdre représente un groupement MoO₆, le centre métallique occupant le centre de l'octaèdre. L'organisation des deux sous réseaux occupés par des cations autour de la chaîne ¹/_{∞}[Mo₈O₂₇]⁶⁻ s'effectue comme indiqué de façon schématique sur la figure 2. Les chaînes ¹/_{∞}[Mo₈O₂₇]⁶⁻ y sont représentées parallèlement à leur axe de propagation. Les chaînes ¹/_{∞}[Mo₈O₂₇]⁶⁻ sont maintenues parallèles par deux sous réseaux ("lattices" 1 et 2 sur la figure 2) dans lesquels se répartissent les cations. La lattice 1 est occupée par les cations H₂DABCO²⁺ qui relient les chaînes ¹/_{∞}[Mo₈O₂₇]⁶⁻ par l'intermédiaire de liaisons hydrogène. Les cations HDMA⁺, Na⁺ et H₃O⁺ se répartissent dans la lattice 2. Les molécules d'eau ne sont pas représentées sur le schéma.

Le matériau de l'invention présente à température ambiante un gap optique d'environ 3,1 eV.

Sous irradiation UV (λₑₓ = 365 nm par exemple) ou à la simple lumière du jour, leur couleur passe du blanc au violet-pourpre en l'espace de quelques minutes : ce changement de couleur est associé à la coexistence de MoVI et MoV avec dès lors existence de transitions optiques d-d et de possibles transferts d'intervalence induisant un phénomène d'absorption dans le visible. Le retour vers l'état fondamental se fait soit par chauffage modéré du matériau, soit à température ambiante dans le noir au bout de quelques heures. Ces matériaux peuvent donner lieu à des applications en cosmétologie, dans des vitrages ou la lunetterie, les textiles, les encres.

Notamment, pour une application en cosmétique, la stabilité du matériau, et la conservation de ses propriétés lorsqu'il se trouve en présence d'eau, permettent d'envisager son utilisation dans de nombreuses compositions, et notamment dans des crèmes teintées, dans des fards à paupières, des fards à joues, dans des mascaras, des rouges à lèvres, dans des fonds de teint, dans des vernis à ongles, dans des compositions colorantes pour les cheveux, telles que des crèmes colorantes, des lotions de coloration, des shampoings colorants, dans des compositions destinées à la réalisation de tatouages corporels. Ni l'eau contenue dans les compositions qui le comprennent, ni l'eau de l'épiderme ne déstabilisent le matériau de l'invention.

L'homme du métier sait adapter les formulations cosmétiques existantes pour y introduire des composés de formule (I), au besoin à l'aide d'agents de solubilisation ou de composés permettant sa mise en suspension.

Par conséquent, un autre objet de l'invention est une composition cosmétique, caractérisée en ce qu'elle comprend au moins un matériau de formule (I).

La capacité des molécules de formule (I) à changer de couleur lorsqu'elles sont soumises à un éclairage UV ou à la lumière du jour permet de faire varier la teinte du maquillage en fonction de l'exposition à la lumière, ce qui présente un double avantage : ludique tout d'abord, car l'effet est surprenant pour un observateur, et esthétique également, car l'intensité du maquillage sera renforcée lorsque la personne qui le porte est dans un environnement très éclairé. La réactivité du matériau permet une adaptation rapide, sans être brutale, à son environnement lumineux

D'autres applications peuvent être envisagées, notamment les molécules de formule (I) peuvent être utilisées comme indicateur d'exposition aux rayonnements UV, de façon à permettre une évaluation fiable de l'intensité de cette exposition et ce dans le but de prévenir l'apparition des pathologies associées à une trop forte exposition aux UV. comme les cancers de la peau. A cet effet, les matériaux de formule (I) peuvent être introduits dans des patches à appliquer sur la peau. Une comparaison avec un échantillon coloré permet de savoir quand une dose d'UV, définie à l'avance, a été reçue par l'utilisateur du patch et ainsi lui indique qu'une application de crème protectrice anti-UV devrait être appliquée, ou que l'exposition devrait être interrompue. Pour cette utilisation, les matériaux de formule (I) peuvent également être placés dans un kit de dosimétrie d'UV, par exemple dans une composition de verre ou de plastique transparent dont la teinte varie en fonction de la dose d'UV cumulée, éventuellement associée avec un échantillon indicateur du maximum.

Par conséquent, un autre objet de l'invention est un article de dosimétrie UV caractérisé en ce qu'il comporte au moins un matériau de formule (I).

De tels articles, patches ou kit de dosimétrie UV, pourraient être associés dans un même emballage commercial avec une crème de protection contre les UV.

Dans les vitrages et les lunettes de vue, le matériau de l'invention peut être utilisé de façon classique pour produire une coloration du verre (organique ou inorganique) lorsque celui-ci est exposé aux UV, et ainsi éviter l'éblouissement de l'utilisateur. Notamment, cette utilisation peut être envisagée pour les lunettes de vue, pour les pare-brise de voitures, pour les flacons d'emballage de matériaux sensibles aux UV.

Par conséquent, un autre objet de l'invention est une composition de verre organique ou inorganique, caractérisée en ce qu'elle comporte au moins un matériau de formule (I).

### PARTIE EXPERIMENTALE

### Synthèse du matériau (H₂DABCO)₂(HDMA)_{0.5}Na_{0.8}(H₃0)_{0.7}[Mo₈O₂₇].3H₂O

Na₂MoO₄.2H₂O (3.388 g - 14 mmol) est dissous dans 30 mL d'eau disttillée. Après ajout de DABCO (0.392 g - 3.5 mmol) et de DMA.HCl (1.141 g - 14 mmol), la solution est laissée à agiter quelques minutes puis le pH est ajusté par ajout au goutte à goutte d'une solution d'acide chlorhydrique 1M jusqu'à pH=4, provoquant l'apparition d'un précipité jaune pâle. La suspension est laissée à agiter pendant trois heures, puis le précipité est isolé par filtration, lavé à l'eau, à l'éthanol et à l'éther. Le rendement en molybdène est de l'ordre de 95 %.

## Revendications

1. Matériau répondant à la formule (I):
(H₂DABCO²⁺)₂(R₁R₂NH₂⁺)_{(2-x-y)}(X)ₓCH₃O⁺)_{y} (Mo₈O₂₇).z(H₂O) (I)
dans laquelle :
R₁, R₂ identiques ou différents représentent chacun un groupement alkyle en C₁-C₁₂, alcényle en C₁-C₁₂, ou alcynyle en C₁-C₁₂, qui peut être linéaire, ramifié ou cyclique ;
X représente un atome alcalin ;
x est un nombre réel 0 ≤ x ≤ 2 ;
y est un nombre réel 0 ≤ y < 2 ;
z est un nombre réel 0 ≤ z ≤ 10 ;
DABCO désigne la molécule 1,4-diazabicyclo[2.2.2] octane.

2. Matériau selon la revendication 1, **caractérisé en ce que** dans la formule (I) R₁ = R₂.

3. Matériau selon la revendication 1 ou la revendication 2, **caractérisé en ce que** dans la formule (I) R₁ et R₂ sont choisis parmi les alkyles en C₁-C₃

4. Matériau selon l'une quelconque des revendications précédentes, **caractérisé en ce que** dans la formule (I) R₁ = R₂ = CH₃.

5. Matériau selon l'une quelconque des revendications précédentes, **caractérisé en ce que** dans la formule (I) 0,5 ≤ x ≤ 1, encore plus préférentiellement x = 0,8.

6. Matériau selon l'une quelconque des revendications précédentes, **caractérisé en ce que** dans la formule (I) 0,5 ≤ y ≤ 1, encore plus préférentiellement y= 0,7.

7. Matériau selon l'une quelconque des revendications précédentes, **caractérisé en ce que** dans la formule (I) X représente un atome choisi parmi Na et K, avantageusement, X = Na.

8. Matériau selon l'une quelconque des revendications précédentes, **caractérisé en ce qu'**il répond à la formule (Ia) :
(H₂DABCO²⁺)₂((CH₃)₂NH₂⁺)_{0.5}(Na)_{0.8}(H₃O⁺)_{0.7}(Mo₈O₂₇).3(H₂O) (Ia)

9. Matériau selon l'une quelconque des revendications précédentes, **caractérisé en ce qu'**il consiste en des chaînes infinies 1/∞[Mo₈O₂₇] entourées des cations organiques de X⁺, de H₃O⁺ et éventuellement de molécules H₂O.

10. Composition cosmétique, **caractérisée en ce qu'**elle comprend au moins un matériau de formule (I).

11. Composition de verre organique ou inorganique, **caractérisée en ce qu'**elle comporte au moins un matériau de formule (I).

12. Article de dosimétrie UV **caractérisé en ce qu'**il comporte au moins un matériau de formule (I).

## Claims

1. Material of formula (I):
(H₂DABCO²⁺)₂(R₁R₂NH₂⁺)_{(2-x-y)}(X)ₓ(H₃O⁺)_{y}(Mo₈O₂₇)_{z}(H₂O) (I)
in which:
R₁, R₂, identical or different, each represent a C₁-C₁₂ alkyl group, a C₁-C₁₂ alkenyl group or a C₁-C₁₂ alkynyl group which may be linear, branched or cyclic;
X stands for an alkali metal atom;
x is a real number where 0 ≤ x ≤ 2;
y is a real number where 0 ≤ y < 2;
z is a real number where 0 ≤ z ≤ 10;
DABCO denotes the 1,4-diazabicyclo[2.2.2] octane molecule.

2. Material as claimed in claim 1, **characterised in that** R₁ = R₂ in formula (I).

3. Material as claimed in claim 1 or claim 2, **characterised in that** R₁ and R₂ are selected from the C₁-C₃ alkyls, in formula (I).

4. Material as claimed in any one of the preceding claims, **characterised in that** R₁ = R₂ = CH₃, in formula (I).

5. Material as claimed in any one of the preceding claims, **characterised in that** 0.5 ≤ x ≤ 1, even more preferably x = 0.8, in formula (I).

6. Material as claimed in any one of the preceding claims, **characterised in that** 0.5 ≤ y ≤ 1, even more preferably y = 0.7, in formula (I).

7. Material as claimed in any one of the preceding claims, **characterised in that** X represents an atom selected from Na and K, advantageously X = Na, in formula (I).

8. Material as claimed in any one of the preceding claims, **characterised in that** it satisfies formula (Ia):
(H₂DABCO²⁺)₂((CH₃)₂NH₂⁺)_{0.5}(Na)_{0.8}(H₃O⁺)_{0.7}(Mo₈O₂₇).3(H₂O) (Ia).

9. Material as claimed in any one of the preceding claims, **characterised in that** it comprises infinite 1/∞[Mo₈O₂₇] chains surrounded by organic cations of X⁺, H₃O⁺ and optionally H₂O molecules.

10. Cosmetic composition, **characterised in that** it comprises at least one material of formula (I).

11. Organic or inorganic glass composition, **characterised in that** it comprises at least one material of formula (I).

12. UV dosimetry article, **characterised in that** it comprises at least one material of formula (I).

## Patentansprüche

1. Material, das der Formel (I) entspricht:
(H₂DABCO²⁺)₂(R₁R₂NH₂⁺)_{(2-x-y)}(X)ₓCH₃O⁺)_{y}(Mo₈O₂₇).z(H₂O) (I)
in der:
R₁, R₂, die gleich oder unterschiedlich sind, jeweils eine C₁-C₁₂-Alkyl-, C₁-C₁₂-Alkenyl- oder C₁-C₁₂-Alkinylgruppe darstellen, die linear, verzweigt oder cyclisch sein kann;
X ein Alkalimetallatom darstellt;
x eine reelle Zahl 0 ≤ x ≤ 2 ist;
y eine reelle Zahl 0 ≤ y < 2 ist;
z eine reelle Zahl 0 ≤ z ≤ 10 ist;
DABCO das Molekül 1,4-Diazabicyclo[2.2.2]octan bezeichnet.

2. Material gemäß Anspruch 1, **dadurch gekennzeichnet, dass** in der Formel (I) R₁ = R₂.

3. Material gemäß Anspruch 1 oder Anspruch 2, **dadurch gekennzeichnet, dass** in der Formel (I) R₁ und R₂ unter C₁-C₃-Alkylgruppen ausgewählt sind.

4. Material gemäß einem der vorangehenden Ansprüche, **dadurch gekennzeichnet, dass** in der Formel (I) R₁ = R₂ = CH₃.

5. Material gemäß einem der vorangehenden Ansprüche, **dadurch gekennzeichnet, dass** in der Formel (I) 0,5 ≤ x ≤ 1, noch bevorzugter x = 0,8.

6. Material gemäß einem der vorangehenden Ansprüche, **dadurch gekennzeichnet, dass** in der Formel (I) 0, 5 ≤ y ≤ 1, noch bevorzugter y = 0,7.

7. Material gemäß einem der vorangehenden Ansprüche, **dadurch gekennzeichnet, dass** in der Formel (I) X ein Atom, ausgewählt aus Na und K, darstellt, vorzugsweise X = Na.

8. Material gemäß einem der vorangehenden Ansprüche, **dadurch gekennzeichnet, dass** es der Formel (Ia) entspricht:
(H₂DABCO²⁺)₂((CH₃)₂NH₂⁺)_{0.5}(Na)_{0.8}(H₃O⁺)_{0.7}(Mo₈O₂₇). 3(H₂O) (Ia)

9. Material gemäß einem der vorangehenden Ansprüche, **dadurch gekennzeichnet, dass** es aus unendlichen Ketten 1/∞[Mo₈O₂₇], umgeben von organischen Kationen X⁺, H₃O⁺ und gegebenenfalls H₂O-Molekülen, besteht.

10. Kosmetische Zusammensetzung, **dadurch gekennzeichnet, dass** sie wenigstens ein Material der Formel (I) umfasst.

11. Organische oder anorganische Glaszusammensetzung, **dadurch gekennzeichnet, dass** sie wenigstens ein Material der Formel (I) umfasst.

12. Gegenstand zur UV-Dosimetrie, **dadurch gekennzeichnet, dass** er wenigstens ein Material der Formel (I) umfasst.
